# EUROPEAN PATENT APPLICATION

(11) **EP 0 572 104 A1**
(43) Date of publication of application: **01.12.1993**
(21) Application number: 93300167.9
(22) Date of filing: 12.01.1993
(51) Int. Cl.: A47G 27/02, D06N 7/00, B32B 5/24, B32B 31/00

(54) **Bath mat with foam backing and process of making same**

(30) Priority: 30.04.1992 US 876272
(71) Applicant: DAWSON HOME FASHIONS, INC., New York, New York 10016 (US)
(72) Inventor: Hogan, Timothy A., Jr., Fairfield, Connecticut 06430 (US); Kornegay, Cecil E., Mt. Olive, North Carolina 28365 (US)
(74) Representative: Chettle, Adrian John

(57) **Abstract**

A bath mat including a cloth layer having upper and lower surfaces and a foam backing having upper and lower surfaces. The upper surface of the foam backing is secured to the lower surface of the cloth layer preferably by a heat lamination process. The cloth layer is preferably formed from a terry cloth material. In addition, the bath mat may be embossed around the periphery thereof. A process for forming the bath mat includes the steps of melting (150) one surface of the foam backing (130) and securing it to the cloth material (120), whereafter the laminated mat is fed through cooling rollers (160) and cut into the desired shapes and sizes.

## Description

### BACKGROUND OF THE INVENTION

The present invention is directed generally to bath mats or rugs and, in particular, to a bath mat with a foam backing which has excellent absorption characteristics while permitting the mat to dry quickly and providing non-slip characteristics which are important in bathroom and other applications where a smooth floor is presented.

In prior art bath rugs or mats, there is generally provided a synthetic fabric top layer which is adhered to a rubber backing layer. A barrier is thus created between the top layer and the rubber layer whereby water sits on the top layer and does not seep through. Such mats remain damp to the touch for long periods.

Alternatively, other types of prior art bath mats are formed strictly from fabric such as terry cloth and act as towels or the like. Such mats without an applied rubber backing slip on tile or other smooth surfaces usually used in bathroom applications and are therefore somewhat dangerous.

Since bath mats are most often used in bathrooms where showers or other bathing activities usually occur, it is most desirable to provide a non-slip bath mat which readily absorbs moisture from the feet of a bather, and which dries relatively rapidly.

Accordingly, it is desired to provide an improved bath mat and a process for making such bath mat.

### SUMMARY OF THE INVENTION

Generally speaking, in accordance with the present invention, a bath mat is provided. The bath mat includes a cloth layer having an upper surface and lower surface, and a foam backing having an upper surface and a lower surface. The upper surface of the foam backing is secured to the lower surface of the cloth layer to form the bath mat. Preferably, a lamination process is used whereby the upper surface of the foam backing is melted and then sealed to the lower surface of the cloth layer.

In a preferred embodiment, the cloth layer is a terry cloth material of about 65% polyester and about 35% cotton. The foam backing is preferably a polyurethane foam such as polyether. In use, the terry cloth layer absorbs moisture from the feet of a bather, for example, which is then retained somewhat in the foam backing and readily wicked to the cloth fabric layer so that the bath mat dries quickly.

Under the process of the present invention, the cloth material and foam material are provided from separate rolls. One surface of the foam material is heated and melted and then bonded to the cloth layer through cooling rollers.

An embossed pattern may be applied to the surface of the bath mat, preferably around the periphery thereof which acts to capture excess water and prevents spill over from the sides, while providing a decorative appearance thereto.

Accordingly, it is an object of the present invention to provide an improved bath mat.

Another object of the present invention is to provide a cushioned bath mat with foam backing which readily absorbs water.

Still another object of the present invention is to provide a bath mat with foam backing which will not slip on a bathroom floor.

A still further object of the present invention is to provide a bath mat with foam backing having an embossed pattern around the periphery thereof.

Yet another object of the present invention is to provide a process of making the improved bath mat of the present invention.

The invention accordingly comprises the several steps and the relation of one or more of such steps with respect to each of the others, and the article possessing the features, properties, and the relation of elements, which are exemplified in the following detailed disclosure, and the scope of the invention will be indicated in the claims.

### BRIEF DESCRIPTION OF THE DRAWINGS

For a fuller understanding of the invention, reference is had to the following description taken in connection with the accompanying drawings, in which:
Fig. 1 is a top and side perspective view of a bath mat with foam backing constructed in accordance with a preferred embodiment of the present invention;
Fig. 2 is an enlarged sectional view taken along line 3-3 of Fig. 2; and
Fig. 3 is a side elevational schematic view depicting the process and apparatus for manufacturing bath mats with foam backing constructed in accordance with the present invention.

### DETAILED DESCRIPTION OF THE PREFERRED EMBODIMENTS

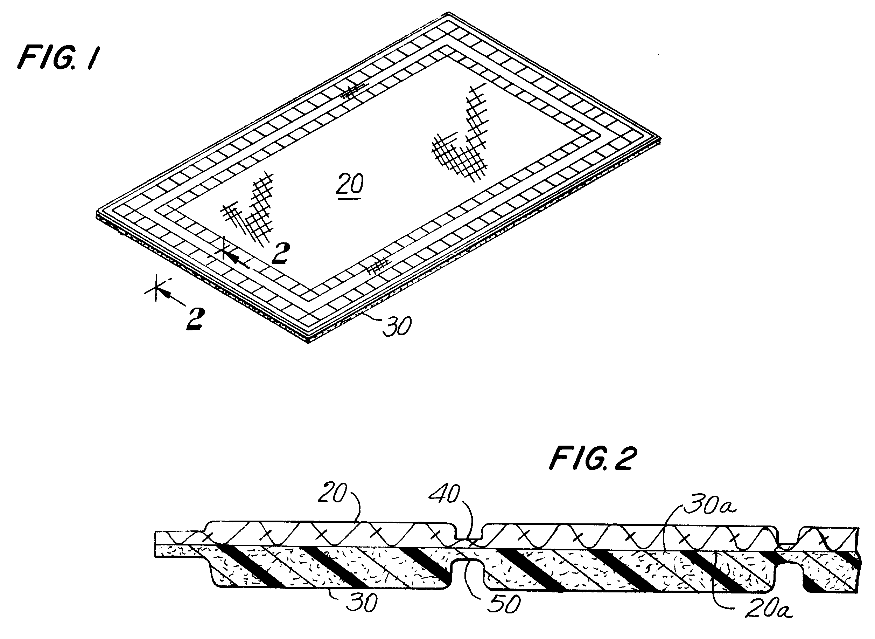

Reference is first made to Figs. 1 and 2 of the drawings which depict a bath mat or rug, generally indicated at 10, constructed in accordance with a preferred embodiment of the present invention. Bath mat 10 is preferably used as a mat or rug in a bathroom or the like where bathing or showering will occur. It is noted, however, that the bath mat of the present invention may be used in other applications such as a beach or pool mat, or the like.

Mat 10 includes a cloth or fabric top layer 20 and a foam bottom layer 30. Cloth layer 20 is preferably formed from a terry cloth material such as circular knit terry loop fabric of about 65% polyester and about 35% cotton. While the cotton portion of the cloth will absorb water, the polyester portion will tend to repel water. In one form of the invention, the face of the terry loops are 50% polyester and 50% cotton and the backing on which the terry loops are attached is about 100% polyester. It is noted, however, that other combinations of polyester and cotton or other such materials may be utilized in carrying out the present invention. It is also noted that the weight of the terry cloth fabric material is preferably about 12 ounces per linear yard. Note also that other fabrics with appropriate absorbency and which are mildew and/or odor resistant may be used.

Foam backing 30 is preferably a polyurethane foam formed from a polyether material having a density of about 1.8 pounds per cubic foot and a thickness of about 3/8". Foam backing 30 can be applied to the lower surface 20a of cloth layer 20 in one of several ways, namely, by sewing, gluing, heat sealing or the like. It is preferred, however, that upper surface 30a of foam backing 30 be heat sealed through a lamination process to lower surface 20a of cloth layer 20 in the manner described below in detail. After lamination, the foam layer has a thickness of about 5/16".

In addition to foam backing 30 being heat sealed to fabric layer 20, mat 10 may also be embossed around the periphery thereof as best depicted in Fig. 1, to provide embossed depressions 40 in fabric layer 20 and corresponding embossed depressions 50 in foam backing 30 as best depicted in Fig. 2. The embossing depressions form a channel which prevents run off of water arid act to catch the water in the border of the mat to prevent spill over to the floor. In addition, the embossing provides a more attractive and decorate appearance to the mat. It is noted that the mat may be made without embossing, or an embossed design or pattern may be applied anywhere on the mat.

The mat construction of the present invention provides a mat with a terry cloth upper surface which is comfortable to step on after bathing and which readily absorbs water from a bather's feet and drips from a bather's body. The foam backing provides a non-slip surface while also cushioning the mat. The foam backing in combination with the terry cloth material provides a mat which will dry rapidly. It is noted that the foam material may be treated so as to be anti-fungal, mildew resistant, anti-bacterial, and the like.

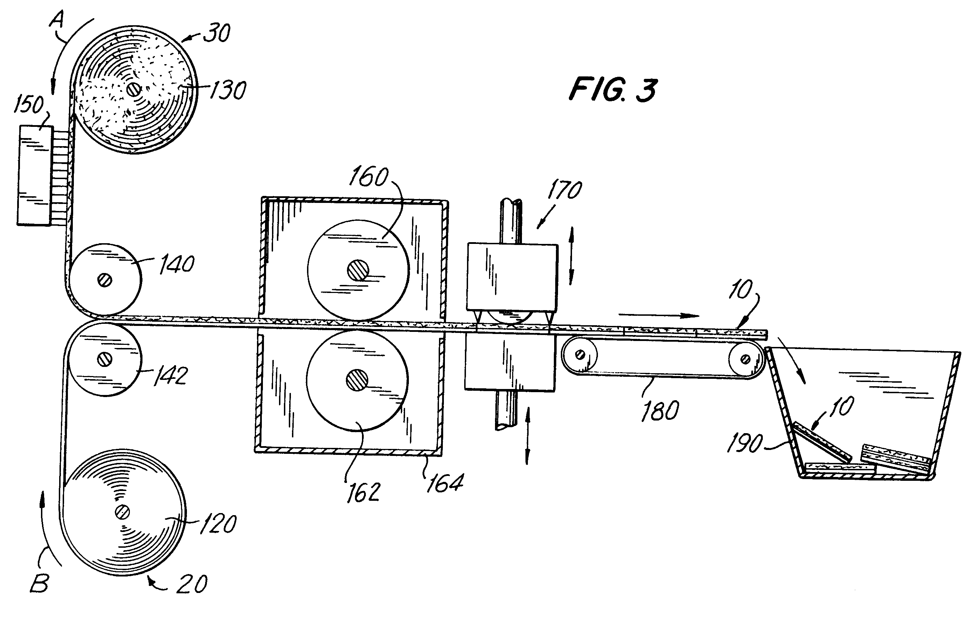

Referring to Fig. 3, the process of making bath mat 10 will now be described. It is seen that foam backing 30 is provided in bulk in a roll of foam material 130 in sheet form. Similarly, terry cloth fabric layer 20 is provided in hulk in a roll of fabric material 120 in sheet form. Foam material 130 is rolled off of the roll in the direction of arrow A towards opposing feed rollers 140 and 142. Similarly, fabric material 120 is fed off of the roll of fabric material in the direction of arrow B towards opposing feed rollers 140 and 142.

Before foam material 130 reaches opposing rollers 140 and 142, its surface is passed over a heating device 150 which provides a propane flame which heats and partially melts the outer surface of the foam facing the flame creating a bonding medium for adherence to the terry fabric. Foam material 30 has a thickness of about 3/8" off the roll. The outer surface foam is preferably heated to about 350°F whereby it melts to a liquid state at a depth about 1/16".

Thereafter, the terry fabric and melted side of the foam are pressed together between opposing cooled rollers 160 and 162 which are preferably cooled at a cooling station 164. A series of such opposing cooled rollers may be provided in cooling station 164. The rollers preferably provide a constant temperature of about 38°F and air pressure of about 100 pounds per square inch at a speed of about 75 feet per minute, thereby creating a smooth and permanent bond of the foam backing to the terry cloth fabric material. After lamination, the foam has a thickness of about 5/16".

After the lamination process is completed, the laminated product is passed through an embossing and cutting press station, indicated at 170 which embosses the desired pattern on the bath mat using embossing wheels or a steel ruled die. The mats are also cut into desired shapes and sizes whereafter they are fed on a conveyor or the like 180 into a hopper 190 for collection and eventual packaging.

From the foregoing, it is readily seen that the present invention provides a most desirable and improved bath mat with a terry cloth surface and a foam backing. The terry cloth material tends to absorb water placed on the surface thereof. The foam material retains excess water from the terry cloth fabric. The terry cloth material will tend to wick water from the foam material expediting the self-draining and drying process of the foam and, hence, the entire bath mat. The embossed pattern on the periphery of the bath mat acts further to collect excess water and prevent spill over to the floor.

It is noted that when cut in larger sheets, the bath mat construction of the present invention may be used as a beach or pool mat. In such situations, it may be preferred to not use embossing around the edges which, when present, tends to prevent water from leaving the border of the mat.

It will thus be seen that the objects set forth above, among those made apparent from the preceding description, are efficiently attained and, since certain changes may be made in carrying out the above process and in the article set forth without departing from the spirit and scope of the invention, it is intended that all matter contained in the above description and shown in the accompanying drawings shall be interpreted as illustrative and not in a limiting sense.

It is also to be understood that the following claims are intended to cover all of the generic and specific features of the invention herein described and all statements of the scope of the invention which, as a matter of language, might be said to fall therebetween.

## Claims

1. A bath mat comprising a cloth layer having an upper surface and a lower surface, a foam backing having an upper surface and a lower surface and securing means for securing the lower surface of said cloth layer to the upper surface of said foam backing.

2. The bath mat as claimed in claim 1, wherein said securing means includes lamination of said upper surface of said foam backing to the lower surface of said cloth layer.

3. The bath mat as claimed in claim 2, wherein said foam backing is formed from a polyurethane foam.

4. The bath mat as claimed in claim 3, wherein said polyurethane foam is a polyether.

5. The bath mat as claimed in claim 3, wherein the density of said foam backing is about 1.8 lbs. per cubic foot.

6. The bath mat as claimed in claim 1, wherein said cloth layer is a terry cloth fabric.

7. The bath mat as claimed in claim 1, wherein said cloth layer is embossed around the periphery thereof.

8. A process for forming bath mats from a rolled sheet of foam material and a rolled sheet of cloth material, comprising the steps of separately removing said sheets of foam and cloth material from said respective rolls, selectively heating one surface of said foam material to partially melt said heated surface, pressing said partially melted surface against one surface of said cloth material to laminate said foam material to said cloth material, and selectively cutting said laminated sheets in preselected sizes to form said bath mats.

9. The process for forming bath mats as claimed in claim 8, wherein said one surface of said foam material is selectively heated to about 350°F.

10. The process for forming bath mats as claimed in claim 8, wherein said partially melted surface of said foam material and said one surface of said cloth material are pressed together by cooled opposing rollers.
